# EUROPEAN PATENT APPLICATION

(11) **EP 4 346 252 A1**
(43) Date of publication of application: **03.04.2024**
(21) Application number: 22306431.2
(22) Date of filing: 27.09.2022
(51) Int. Cl.: H04W 8/18

(54) **A TELECOMMUNICATION ARRANGEMENT FOR SWITCHING FROM A FALLBACK SUBSCRIPTION TO AN OPERATIONAL SUBSCRIPTION**

(71) Applicant: THALES DIS FRANCE SAS, 92190 Meudon (FR)
(72) Inventor: GROS, Jean Francois, 13012 Marseille (FR); VOYER, Jerome, 13390 Auriol (FR); PHAN, Ly-Thanh, 92350 Le Plessy-Robinson (FR)
(74) Representative: Scheer, Luc

(57) **Abstract**

The invention concerns a telecommunication arrangement 10 for switching from a fallback subscription 14 to an operational subscription 11-13, the telecommunication arrangement 10 comprising a first agent 16, PSA, having a list of operational profiles available for the telecommunication arrangement 10, each operational profile corresponding to a subscription from a MNO, and which of the operational profiles can be used when a telecommunication terminal comprising the telecommunication arrangement 10 enters under the coverage of an operational network, the telecommunication arrangement 10 also comprising a second agent 15, PSCA, able to configure the fallback subscription 14 in order for the first agent 16 to switch from the fallback subscription 14 to the operational network under which the telecommunication terminal enters under coverage.

## Description

The present invention concerns telecommunications within cellular networks and more precisely the ability to switch from a fallback subscription to an operational subscription from a plurality of MNOs (Mobile Network Operators).

It is known that in many deployments of telecommunication terminals like mobile telecommunication terminals or loT telecommunication terminals, a default or bootstrap mobile subscription is installed on the telecommunication terminal before an operational mobile subscription is later installed for the operational phase of the telecommunication terminal.

The role of the default or bootstrap subscription is to provide a global access to mobile services to the telecommunication terminal. It is has no particular QoS (Quality of Service) requirement but global (multiple countries) coverage. It is used essentially to perform administrative tasks such as downloading of an operational profile, localization of the telecommunication terminal or send/answer keep alive signals to a remote server. Once an operational subscription or SIM profile has been downloaded onto the telecommunication terminal, the default or bootstrap subscription becomes a backup profile i.e. a fallback subscription, and is used only when the telecommunication terminal cannot access the network services (it is subscribed to) with its operational subscription. For instance, the telecommunication terminal may be out of coverage of the network it is subscribed to via the operational profile. Furthermore, even when an operational profile has already been installed on the telecommunication terminal, the default/bootstrap/fallback subscription can still be used for previously mentioned administrative tasks.

The terms default subscription or bootstrap subscription or fallback subscription are used interchangeably. The terms (U)SIM profile or subscription or connectivity are equivalent in this description and are used interchangeably. Unlike fallback subscription, an operational subscription is optimized for the operation of the telecommunication terminal with specific requirement e.g. Quality of Service, indoor coverage, latency, costs. The network providing such service is usually a local network, or may have geographic areas that are not covered. In such case the fallback subscription is used in order to provide coverage for the telecommunication terminal operation in such out-of-coverage areas by the operational subscription. When a telecommunication terminal is out-of-coverage of its operational subscription and the telecommunication terminal is operating on its fallback subscription, several issues arise. Using another subscription (fallback subscription) than the operational subscription has the following issues or disadvantages:
- The Quality of Service may not be optimum in terms of e.g. bandwidth, latency, reliability, access priority, the service may need to operate in degraded mode;
- It is also more expensive since its purpose is to get global coverage based on global roaming (roaming in most countries).
- Furthermore, the use case may appear when the telecommunication terminal operates in public networks, as well as in private network context, and in hybrid private/public network context. It is thus imperative for the telecommunication terminal to switch as soon as possible to its operational subscription, i.e. as soon as the telecommunication terminal returns into the coverage of the operational network (private network).

The problem to be solved are the followings:
- Avoid polling from Card (secure element in general) to Server due to battery consumption and usage of fallback connectivity;
- The server cannot know whether the telecommunication terminal is under coverage of the operational network. Only the telecommunication terminal has this information;
- Loss of connectivity due to continuous attempts to select operational connectivity is not an option for service continuity reason;
- Battery drain due to frequent network selections to search for operational network coverage is not desirable;
- The operational subscriptions issuers do not have any business relationship with the fallback subscription issuer so that the fallback subscription cannot "know" at personalization stage what is the currently optimum operational subscription to be used.

The purpose of the invention is, when the telecommunication terminal is connected with a fallback connectivity, to allow the telecommunication terminal to automatically switch to the best suited operational connectivity (when there are more than one operational connectivity) as soon as the telecommunication terminal is back under coverage of this operational network.

This purpose, and others that will appear below is reached thanks to a telecommunication arrangement for switching from a fallback subscription to an operational subscription, the telecommunication arrangement comprising a first agent having a list of operational profiles available for the telecommunication arrangement, each operational profile corresponding to a subscription from a MNO, and which of the operational profiles can be used when a telecommunication terminal comprising the telecommunication arrangement enters under the coverage of an operational network, the telecommunication arrangement also comprising a second agent able to configure the fallback subscription in order for the first agent to switch from the fallback subscription to the operational network under which the telecommunication terminal enters under coverage.

The telecommunication arrangement of the invention can be installed in the telecommunication terminal or in a secure element cooperating with the telecommunication terminal.

The operational profile can be unique or then can be a plurality of operational profiles.

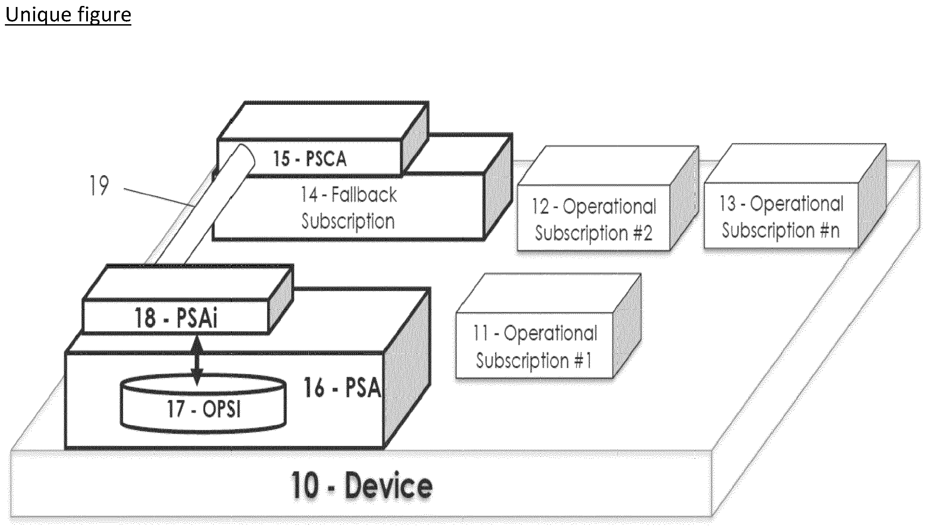

Other features and advantages of the invention will appear by reading the following description of the unique figure that represents a telecommunication arrangement for switching from a fallback subscription to an operational subscription according to the invention.

In this figure, several elements are represented:
- A device 10 that can be a secure element like a SIM card, a USIM application, a UICC, a eUICC (embedded UICC) or an iUICC (integrated UICC). It can also be a telecommunication terminal.
- On this device, here, several operational subscriptions are installed. They are referenced 11 to 13 and named Operational subscription #1 to #n. It is also possible to have a single operational subscription.
- A fallback subscription 14 like previously explained.
- An agent 15, called second agent PSCA (Profile Selection Configuration Agent), able to configure the fallback subscription 14 in order for another agent 16 (called first agent PSA for Profile Selection Agent) to switch from the fallback subscription 14 to an operational network under which the telecommunication terminal enters under coverage. The first agent 16 has a list of operational profiles available for the telecommunication terminal, each operational profile corresponding to a subscription from a MNO, and which of the operational profiles can be used when a telecommunication terminal comprising the telecommunication arrangement enters under the coverage of an operational network. The telecommunication terminal
- The PSA 16 comprises an OPSI 17 (for Operational Profile Selection Information) that is an information store e.g. implemented as a database or a list of one or multiple entries which function is to store information on for example the list of HPLMN codes corresponding to the operational subscriptions 11-13, profile identities, scripts,...
- The OPSI 17 can be accessed by PSCA 15 via PSAi 18 (for Profile Selection Agent interface) an API exposed by PSA 16.

The PSA 16 of the device 10 (telecommunication terminal or secure element) knows at least one of the following information: Which operational profiles have been downloaded, the priority order of these operational profiles or the last one that has been used before having switched to the fallback subscription 14. This information can be transmitted, through the PSAi 18 to the PSCA 15 that configures the fallback subscription 14. For that, the PSCA 15 interrogates the OPSI 17 through the PSAi 18 which profile (subscription) has to be activated, in function of the priority of the profiles and PSCA 15 stores this information in its profile file in its local memory (e.g. ME local memory, default subscription EF e.g. EHPLMN EF, OPLMNwAcT EF, HPLMNwAcT...).

The PSCA 15 then knows which PLMN has been selected as an operational profile and switches the fallback subscription 14 to the operational profile corresponding to this PLMN (thanks to the PLMN code detected by the telecommunication terminal). This means that the device 10 will switch to the desired PLMN under which the terminal is under coverage (the PSA 16 has participated to the download of the operational profiles and knows the corresponding PLMN codes).

When a switch is done on a profile, the PSA 16 also stores its PLMN code, in order to know the last operational profile on which a switch from the fallback subscription 14 to this operational profile (the PSA 16 has all these information in its database OPSI 17. The OPSI 17 is accessible through the application programming interface PSAi 18 exposed by PSA 16, by an applet present in the fallback subscription (PSCA 15).

So, the PSCA 15 configures the fallback subscription. The telecommunication terminal detects the availability of the operational network and makes its selection. Once the selection of the operational network is made, the terminal updates the LOCI file of the currently active profile i.e. fallback profile. This update of the LOCI file of the fallback profile is then detected by the PSA 16 and the PSA 16 makes the switch from the fallback profile to the operational profile. The switch consists of activating the operational profile (deactivating the fallback profile) and resetting the terminal so that it takes into account the new profile that has been activated (for instance through a REFRESH command).

In this procedure:
- the PSA 16 does not necessarily update the list of preferred networks.
- the PSA 16 does not take over the operational network either, it is the terminal which has control of the network selection procedure.
- The list of preferred networks in the order of priority is provided by the fallback profile in the terminal. The order of priority may be provided by the manufacturer of the secure element.

The PSA 16 may be a transverse applet that knows which profile (subscription) has to be activated because it has been used for executing the download of the operational profiles and applets. The PSA 16 may be an application on the mobile equipment.

The PSCA 15 has the function to actualize the Equivalent HPLMN file.

As previously explained, when the terminal enters in the fallback subscription, it has no more communication with operational profiles.

The preferred list of operational subscriptions can be updated by OTA by the manufacturer of the secure element or by an loT service provider which has negotiated contracts with the different MNOs providing the operational subscriptions and these operational profiles are downloaded by the service provider. Therefore, the final user has nothing to act.

There is also no need for the involvement of the HPLMN in this invention, only the service provider decides which MNO provides the fallback subscription 14 and the operational subscriptions 11-13.

So, in summary, the invention consist in:
- When a Profile Selection Agent (PSA 16), executing on a telecommunication terminal, is asked (e.g. by a remote server or a local agent or the user) to download or activate an operational profile, the PSA 16 stores the Operational Profile Selection Information (OPSI 17 e.g. list of PLMNs or identities of the operational profiles, or location information) into its local memory.
- When the operational connectivity is lost (e.g. telecommunication terminal goes out of coverage of the operational network, or due to network congestion or in general the operational network becomes inaccessible), the PSA 16 switches the telecommunication terminal connectivity (obtained with the operational subscription) to a fallback connectivity (obtained with the fallback subscription).
- A Profile Selection Configuration Agent (PSCA 15), executing on the telecommunication terminal when the fallback profile 14 is active (e.g. an agent executing in the fallback profile or an agent executing on the communication terminal), communicates with the PSA 16 to get the current Operational Profile Selection Information. Such communication could be performed for instance via a known API exposed by the PSA 16 or via a messaging mechanism or a function call when PSCA 15 and PSA 16 form a same agent.
- The PSCA then updates its local memory or the memory of the fallback subscription (e.g the EHPLMN file) with the retrieved OPSI 17 for the selection of the operational profile e.g. the PSCA 15 stores the list of PLMNs in EHPLMN file in the fallback subscription in priority order. Depending on the use case, the OPSI 17 may be a unique piece of information (e.g. PLMN code, or location information) or list of such piece of information ranked in priority order (e.g. list of PLMN codes, or list of locations).
- When the telecommunication terminal is back under the coverage of the operational network (e.g. based on PLMN code stored in EHPLMN), the telecommunication terminal attempts to connect to that network with the fallback profile network 14 selection configuration information (accordingly to 3GPP TS 23.122).
- The Profile Selection Agent 16 detects the new connection to the operational network or rejection from that network,
- The PSA 16 then switches back to operational profile (with the PLMN code or subscription identity). In another embodiment, the PSCA 15 of the fallback profile may get the Profile Selection Information from a remote server. The PSCA 15 and PSA 16 may be co-localized forming a unique agent.

The invention is able to select the best operational connectivity to switch to, back from the fallback connectivity,

The invention is able to perform the switch back to operational connectivity as soon as the operational network is available.

The invention also minimizes the usage of the fallback connectivity and does not require remote communication, thus minimizes the power consumption due to such communication.

When PSCA 15 and PSA 16 are implemented in the secure element, then the ME (Mobile Equipment) firmware and software are not impacted. On the other hand when the PSCA 15 and PSA 16 are implemented in the ME, then several USIMs or a multiple USIM enable profiles could be managed e.g. one of the UICC or USIM profiles could be selected depending on the OPSI 17 without any impact on the UICC or USIM profiles.

The existing relevant prior art regarding the invention could be a network based solution that would be more complex e.g. based on localization information of the telecommunication terminal or other network information, or would not be able to know when the telecommunication terminal returns under coverage of the operational network.

## Claims

1. A telecommunication arrangement (10) for switching from a fallback subscription (14) to an operational subscription (11-13), said telecommunication arrangement (10) comprising a first agent (16), PSA, having a list of operational profiles available for said telecommunication arrangement (10), each operational profile corresponding to a subscription from a MNO, and which of said operational profiles can be used when a telecommunication terminal comprising said telecommunication arrangement (10) enters under the coverage of an operational network, said telecommunication arrangement (10) also comprising a second agent (15), PSCA, able to configure said fallback subscription (14) in order for said first agent (16) to switch from said fallback subscription (14) to the operational network under which said telecommunication terminal enters under coverage.

2. A telecommunication arrangement according to claim 1 wherein it is installed in said telecommunication terminal.

3. A telecommunication arrangement according to claim 1 wherein it is installed in a secure element cooperating with said telecommunication terminal.

4. A telecommunication arrangement according to any of the claims 1 to 3 wherein said operational profile is unique.

5. A telecommunication arrangement according to any of the claims 1 to 3 wherein there are a plurality of operational profiles.
